(19) Europäisches Patentamt
European Patent Office
Office européen des brevets

(11) **EP 2 052 385 B1**

(12) **EUROPEAN PATENT SPECIFICATION**

(45) Date of publication and mention
of the grant of the patent:
**28.04.2010 Bulletin 2010/17**

(21) Application number: **07805266.9**

(22) Date of filing: **31.07.2007**

(51) Int Cl.:
**G11B 7/0033** (2006.01)　**G11B 7/005** (2006.01)
**G11B 7/013** (2006.01)　**G06K 19/06** (2006.01)
**G06K 19/16** (2006.01)

(86) International application number:
**PCT/IB2007/053008**

(87) International publication number:
**WO 2008/017985 (14.02.2008 Gazette 2008/07)**

(54) **INFORMATION CARRIER, AND SYSTEM FOR READING SUCH AN INFORMATION CARRIER**

INFORMATIONSTRÄGER SOWIE SYSTEM ZUM LESEN EINES DERARTIGEN INFORMATIONSTRÄGERS

SUPPORT D'INFORMATIONS, ET SYSTÈME POUR LIRE UN TEL SUPPORT D'INFORMATIONS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.08.2006 CN 200610110975**

(43) Date of publication of application:
**29.04.2009 Bulletin 2009/18**

(73) Proprietor: **Koninklijke Philips Electronics N.V.
5621 BA Eindhoven (NL)**

(72) Inventors:
- **PASQUARIELLO, Donato
S-5656 AE Eindhoven (SE)**
- **VAN DEN EERENBEEMD, Jacobus Maria Antonius
NL-5656 AE Eindhoven (NL)**
- **SCHLEIPEN, Johannes Joseph Hubertina Barbara
NL-5656 AE Eindhoven (NL)**

(74) Representative: **Uittenbogaard, Frank
Philips
Intellectual Property & Standards
P.O. Box 220
5600 AE Eindhoven (NL)**

(56) References cited:
**EP-A- 0 954 801　EP-A- 1 073 097
EP-A- 1 665 241　US-A- 5 905 702**

- **SATOSHI KAWATA ET AL: "Three-Dimensional Optical Data Storage Using Photochromic Materials" CHEMICAL REVIEWS, ACS, WASHINGTON, DC, US, vol. 100, no. 5, 2000, pages 1777-1788, XP002396010 ISSN: 0009-2665**
- **LIANG ZHONGCHENG ET AL: "A NOVEL 3D MULTILAYERED WAVEGUIDE MEMORY" PROCEEDINGS OF THE SPIE, SPIE, BELLINGHAM, VA, US, vol. 4930, 15 October 2002 (2002-10-15), pages 134-137, XP002437863 ISSN: 0277-786X**

**Description**

FIELD OF THE INVENTION

The invention relates to an information carrier, and a system for reading such an information carrier.
The invention may be used in the field of optical storage.

BACKGROUND OF THE INVENTION

Patent application published under number WO2005/027107-A1 describes an information carrier intended to store data arranged according to a matrix, the data value depending on a transparent/non-transparent state of the corresponding data areas. To readout the data, an array of light spots is simultaneously applied to the data areas, for generating an array of output light beams reflecting each data value. Data values are thus detected by a CMOS detector facing all the surface of the matrix.
The information and system for reading the information as described in the prior art document has technical limitations. In particular, such technical solution is expensive and complex since a two-dimensional CMOS detector is needed to detect data value.
EP1073097 discloses an information carrier comprising a layer for storing data, said layer having a face having placed thereon a matrix of indentations, said indentations being shaped so as to deviate part of an input light beam applied to said layer, the presence of an indentation reflecting a stored data having a first state, the absence of an indentation reflecting a stored data having a second state.

OBJECT AND SUMMARY OF THE INVENTION

It is an object of the invention to propose an information carrier for storing data which can be read by a cost-effective reading system.
To this end, the information according to the invention comprises a layer for storing data, said layer forming a light-guide having an internal face having placed thereon a matrix of indentations said indentations being shaped so as to deviate part of an input light beam applied to said layer towards a first edge of said information carrier along a first direction, the presence of an indentation reflecting a stored data having a first state, the absence of an indentation reflecting a stored data having a second state.
When a light beam is applied to an indentation, the indentation generates a deviated light beam reflecting the data value. The deviated light beam can easily be detected by a photodetector such as a photo diode, leading to a cost-effective solution.
Detailed explanations and other aspects of the invention will be given below.

BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner :

Fig.1 depicts a first embodiment of an information carrier according to the invention, together with a reading system for reading this information carrier,
Fig.2 depicts the shape of an indentation used in said first embodiment,
Fig.3 illustrates the readout of data on an information carrier according to the invention,
Fig.4 depicts a second embodiment of an information carrier according to the invention,
Fig.5 illustrates the data readout of an information carrier as depicted in Fig.4, with an improved reading system according to the invention,
Fig.6 illustrates a data stream generated by a reading system when reading data on said second embodiment of the information carrier according to the invention,
Fig.7 depicts a third embodiment of an information carrier according to the invention, together with a reading system for reading this information carrier,
Fig.8 depicts the shape of an indentation used in said third embodiment.

DETAILED DESCRIPTION OF THE INVENTION

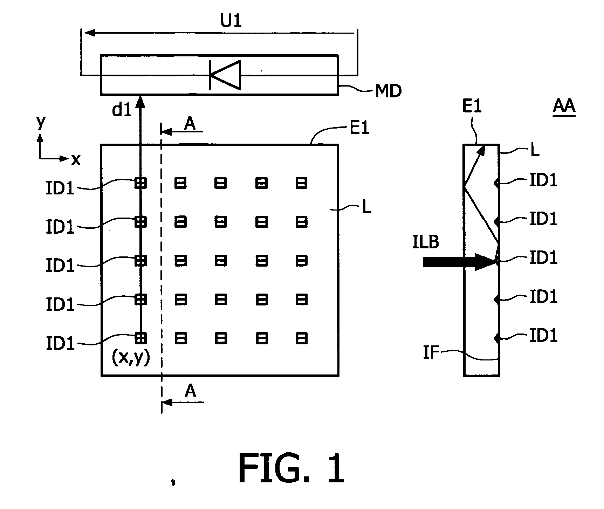

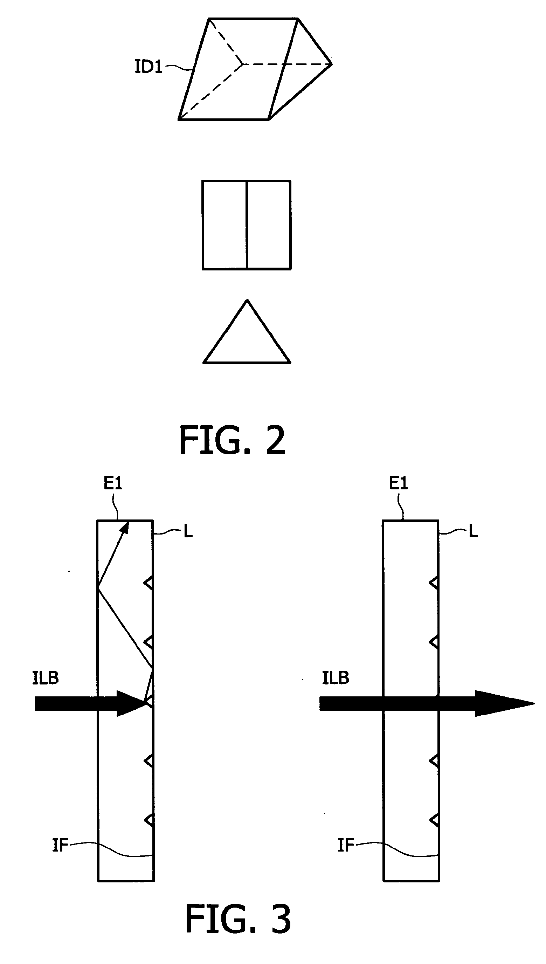

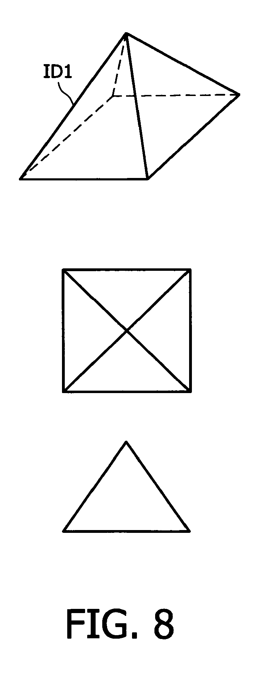

Fig.1 depicts a first embodiment of an information carrier according to the invention. The left side view corresponds to a top view, while the right side view corresponds to a cross-section view according to section AA.
The information carrier comprises a layer L for storing data, said layer L forming a light-guide having an internal face IF having placed thereon a matrix of indentations ID1. For example, the layer L can be made of plastic material, such material having a reflective coefficient sufficient (compared to air) to guaranty propagation of the light inside. The indentations are shaped so as to deviate part of an input light beam ILB applied to said layer towards a first edge E1 of said information carrier along a first direction d1. The storage capacity of the information carrier is determined by the size of the indentations and the distance between two adjacent indentations.
To allow the light be deviated along direction d1, the indentations ID1 may be prism-shaped or pyramid-shaped. Fig.2 illustrates a three-dimensional, top and side views of such an indentation. In order to improve light reflectivity, the indentation may advantageously be covered by a reflective coating such as a silver film. Fig. 8 illustrates a three-dimensional, top and side views of such an indentation. In order to improve light reflectivity, the indentation may advantageously be covered by a reflective coating such as a silver film.

The presence of an indentation at position (x, y) reflects a stored data having a first state (e.g. "1" if a binary data is considered). In this case, as illustrated by the left side view of Fig.3, the light beam applied to an indentation is deviated towards edge E1 of the layer L.

On the contrary, the absence of an indentation at position (x,y) reflects a stored data having a second state (e.g. "0" if a binary data is considered). In this case, as illustrated by the right side view of Fig.3, the light beam directly passes through the layer L without being deviated towards edge E1.

A given data positioned at coordinates (x,y) on the information carrier is thus read by detecting the presence or absence of light at edge E1 of the layer. The light detection is done by a monolithic detector MD placed in front edge E1, and generating an output electrical signal U1 reflecting the presence or absence of a light signal at edge E1. For example, the monolithic detector MD may correspond to a photodiode able to detect light along a large opening.

The monolithic detector MD is part of the reading system in which the information is intended to be inserted in view of being readout. This reading system additionally comprises a generator (e.g. a laser, not shown) for generating the light beam ILB intended to be applied to said information carrier, and an actuator (not shown) for moving said light beam from one indentation to another of said information carrier.

According to this first embodiment, since the position (x,y) of the light beam ILB is known by the reading system for accurately positioning the light beam on a given indentation (or on an area without indentation, depending on the data value stored at this position), only the data value needs to be detected to fully know the data value at a given (x,y) position.

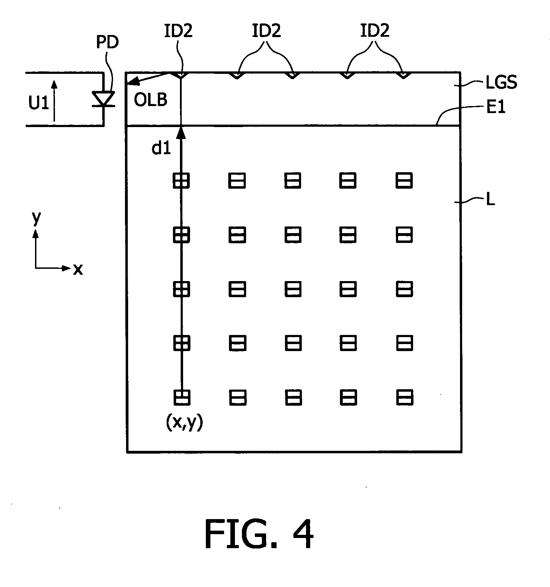

Fig.4 depicts a second embodiment of an information carrier according to the invention. This embodiment differs from that described by Fig.1 in that the light deviated towards edge E1 is detected in a different way.

Indeed, the information carrier comprises a light-guiding structure LGS placed along the first edge E1. The light-guiding structure LGS is intended to collect light deviated towards said first edge (i.e. along a long opening), so as to generate an output light beam OLB having a diameter much smaller then the length of edge E1, resulting in a much easier light detection.

A given data positioned at coordinates (x,y) on the information carrier is thus read by detecting presence or absence of light at the lateral output of the light-guiding structure LGS. The light detection is done by a photodiode PD placed at the lateral output of the light-guiding structure LGS. The photodiode PD is intended to generate an output electrical signal U1 reflecting the presence or absence of a light signal OLB. The photodiode PD is part of the reading system in which the information is intended to be inserted in view of being readout.

The light-guiding structure LGS corresponds to a light-guide comprising some indentations ID2 placed on the internal face opposite edge E1. Indentations ID2 allow to deviate light having direction d1 towards the lateral output of the light-guiding structure LGS. In order to improve light reflectivity, indentations ID2 may advantageously be covered by a reflective coating such as a silver film.

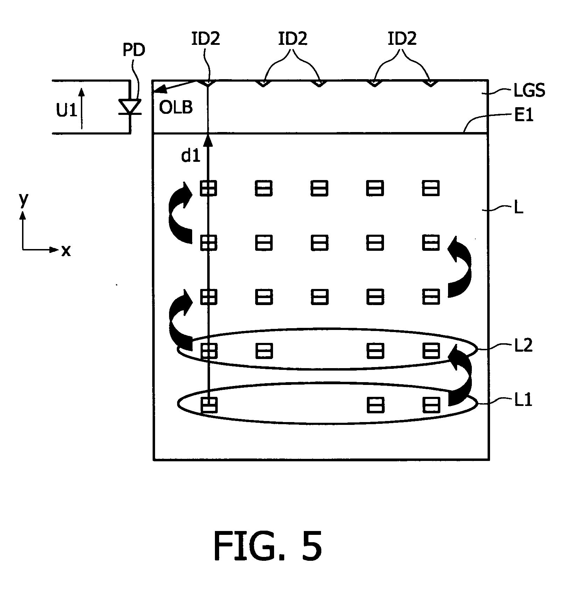

Fig.5 illustrates the data readout of an information carrier as depicted in Fig.4, with an improved reading system according to the invention.

The reading system comprises a generator (e.g. a laser, not shown) for generating an input light beam ILB intended to be applied to said information carrier, and an actuator (not shown) for moving at a constant speed v the input light beam ILB along data track (L1, L2...) of said information carrier.

As illustrated, the actuator first moves the input light beam ILB along the first data track L1 from left to right, then goes up by one data track (illustrated by black arrow), then continue to move the input light beam ILB along the second data track L2 from right to left. Similar process applies for the following data tracks.

The photo sensor PD of the reading system is intended to generate an output signal U1 from the output light beam OLB, said output light beam OLB being generated by said information carrier in response to said input light beam ILB.

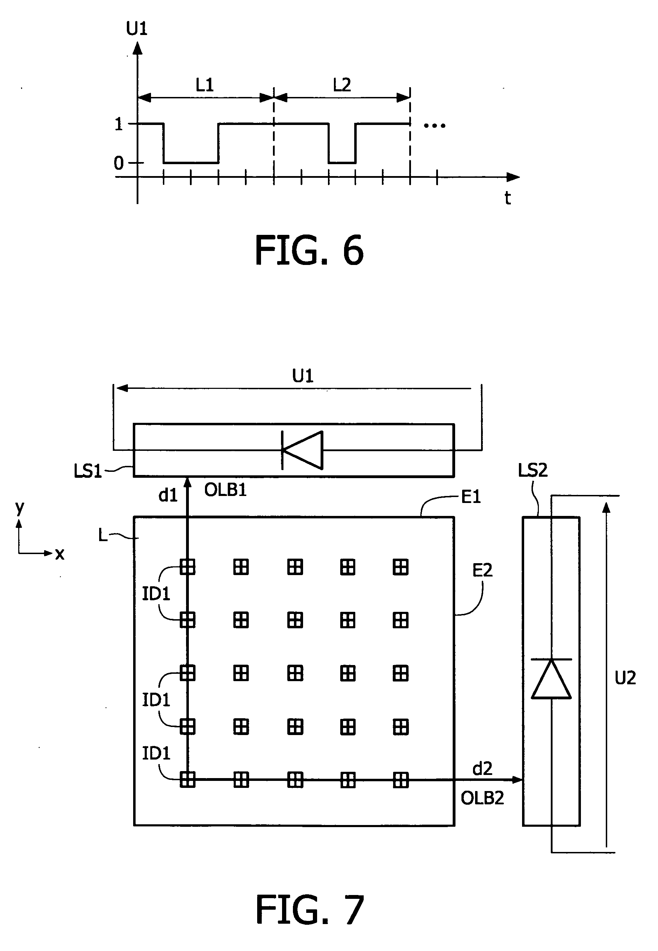

Fig.6 illustrates by an example the output signal U1 when reading out the first two data tracks L1 and L2 of the information carrier depicted in Fig.5. The output signal U1 is equivalent to a data stream, the level of this signal varying along the time according to the value of data stored on the information carrier. For example, a low level of signal U1 indicates a "0" value, while a high level of signal of U1 indicates a "1" value. The value detection, as well as the position (x,y) of the data on the information carrier, are done by a calculation unit (not shown) from said output signal U1 and the value of said constant speed v.

To this end, the position y of a given data recorded at time t in signal U1, is calculated as follows by the calculation unit:

$$y = \text{Int}\ [(v^*t)/Dx]$$

where Int represents the integer operator,
Dx is the length of one track (along x axis).

Also, the position x of a given data recorded at time t in signal U1, is calculated as follows by the calculation unit:

$$x = (v^*t) - Dx * \text{Int}\ [(v^*t)/Dx]$$

The advantage of this reading system is that the position (x,y) of a given data stored on the information carrier is directly derived from the output signal U1. In other words, it is no more necessary that the position (x, y) is known by the reading system, which simplifies the reading of the information carrier since the actuator just needs to keep the input light beam ILB on the data tracks, without taking care of where are positioned the data on the information carrier.

Fig.7 depicts a third embodiment of an information carrier according to the invention, together with a reading system for reading data on this information carrier.

The information carrier differs from that described in Fig.1 in that not only the indentations ID1 are shaped so as to deviate part of an input light beam ILB applied to the layer L towards a first edge E1 of said information carrier along a first direction d1, but also shaped so as to deviate part of said input light beam ILB towards a second edge E2 of said information carrier along a second direction d2. The first direction d1 and second direction d2 are advantageously perpendicular, as illustrated.

To allow the light be deviated along directions d1 and d2, the indentations ID1 may be pyramid-shaped, as illustrated by Fig.8.

The reading system comprises a generator (e.g. a laser, not shown) for generating an input light beam (ILB) intended to be applied to the information carrier, and an actuator (not shown) for moving said input light beam (ILB) along data tracks of said information carrier.

The light detection is done by:

- a first line sensor LS1 for generating a first output signal U1 from a first output light beam OLB1, said first output light beam OLB1 being generated by said information carrier in response to said input light beam ILB,
- a second line sensor LS2 for generating a second output signal U2 from a second output light beam OLB2, said second output light beam OLB2 being generated by said information carrier in response to said input light beam ILB,
- a calculation unit (not shown) for detecting from said first output signal U1 and said second output signal U2, the position and data value of said data.

Each line sensor is characterized by the fact that the output voltage generated is proportional to the position the output light beam (OLB1, OLB2) is applied to the line sensor. The line sensor maybe, for example, made of several different materials such as crystalline silicon (c-Si), amorphous silicon (a-Si:H), polymers and CuO.

Alternatively, the line sensor (LS1, LS2) may correspond to pixelated line sensor, each pixelated line sensor consisting of several photodiodes having a line configuration.

Advantageously, the first line sensor LS1 and the second line sensor LS2 are arranged perpendicularly to each other, in particular if the information carrier has a rectangular data matrix.

Such a reading system is more robust because it is not necessary to synchronize the speed of the input light beam ILB over the information carrier and the read out done by the line sensors. The scanning done by the input light beam ILB and the read-out done by line sensors become independent. The scanning speed becomes less critical and consequently a lower bit error rate can be obtained. Note also that the speed at which the input light beam ILB is moved is not necessarily constant and/or known, contrary to embodiment depicted in Fig.5.

The following illustrates how the value and position of data are recovered by the calculation unit. For sake of understanding, only one track of data (i.e. one dimensional) is considered, similar explanations applying for determining data arranged according to a matrix (i.e. two-dimensional arrangement).

According to a first example, let suppose a line sensor measures the following sequence of voltages (e.g. via output signal U1): [ 0.84; 1.46; 1.77; 2.08; 3.01; 4.25; 4.56 ]

These voltages are generated by data having an indentation on their data area. The position of these data (e.g. having a "1" state) can thus directly be positioned, since the position is proportional to the voltage value. However, the position of data having no indentations on their data area must also be recovered by the calculation unit. To this end, the calculation unit first calculates the distance between two adjacent indentations by determining the smallest voltage difference. In this example, this difference equals 0.31 and the difference between all other points is an integer multiple of that. So the distance between two consecutive data is 0.31. This allows to identify that between 0.84 and 1.46 two data areas having no indentations are placed on the information carrier, that between 2.08 and 3.01 two data areas having no indentations are placed on the information carrier, and that between 3.01 and 4.25 three data areas having no indentations are placed on the information carrier. In other words, the following set of binary data is retrieved: [ 1011100100011 ]

According to a second example, let suppose a line sensor measures the following sequence of voltages (e.g. via output signal U1): [ 0.56; 2.24; 4.34; 5.6; 7.28 ]

These voltages are generated by data having an indentation on their data area. The position of these data (e.g. having a "1" state) can thus directly be positioned, since the position is proportional to the voltage value. However, the position of data having no indentations on their data area must also be recovered by the calculation unit. To this end, the calculation unit first calculates the distance between two adjacent indentations by determining the smallest voltage difference. In this example, this difference equals 1.26.

However, this difference value does not generate integer values when dividing the distances between the other data points. As a consequence, sub-multiples of this initial difference are tested by the calculation unit, until finding the relevant sub-multiple, 1.26/3 = 0.42 in this case. This allows to identify that between 0.56 and 2.24 three data areas having no indentations are placed on the information carrier, that between 2.24 and 4.34 four data areas having no indentations are placed on the information carrier, that between 4.34 and 5.6 two data areas having no indentations are placed on the information carrier, and that between 5.6 and 7.28 three data areas having no indentations are placed on the information carrier. In other words, the following set of binary data is retrieved: [ 10001000010010001 ]

Advantageously, by placing some predefined set of data with indentations at the perimeter of the data matrix, the voltage difference between two adjacent data having indentations can be more easily determined since no use to test sub-multiples.

While the invention has been illustrated and described in detail in the drawings and foregoing description, such illustration and description are to be considered illustrative or exemplary and not restrictive; the invention is not limited to the disclosed embodiments. For example, the shape of the indentations could be different, as long as it allows deviating the input light beam towards at least one edge of the information carrier.

In the claims, the word "comprising" does not exclude other elements or steps, and the indefinite article "a" or "an" does not exclude a plurality. Any reference signs in the claims should not be construed as limiting the scope.

## Claims

**1.** An information carrier comprising a layer (L) for storing data, said layer forming a light-guide having an internal face (IF) having placed thereon a matrix of indentations (ID1, ID2), said indentations (ID1) being shaped so as to deviate part of an input light beam (ILB) applied to said layer towards a first edge (E1) of said information carrier along a first direction (d1), the presence of an indentation reflecting a stored data having a first state, the absence of an indentation reflecting a stored data having a second state.

**2.** An information carrier as claimed in claim 1, wherein said indentations (ID1, ID2) are also shaped so as to deviate part of said input light beam towards a second edge (E2) of said information carrier along a second direction (d2).

**3.** An information carrier as claimed in claim 1, further comprising a light-guiding structure (LGS) placed along said first edge (E1) for collecting light deviated towards said first edge (E1), so as to generate an output light beam (OLB).

**4.** An information carrier as claimed in claim 1, 2 or 3 wherein said indentations (ID1, ID2) are prism-shaped.

**5.** An information carrier as claimed in claim 1, 2 or 3 wherein said indentations (ID1, ID2) are pyramid-shaped.

**6.** A system for reading data on an information carrier, said system comprising:

- a generator for generating an input light beam (ILB) intended to be applied to said information carrier,
- an actuator for moving said input light beam (ILB) along data tracks of said information carrier,
- a first line sensor (LS1) for generating a first output signal (U1) from a first output light beam (OLB1), said first output light beam (OLB1) being generated by said information carrier in response to said input light beam (ILB), said first line sensor (LS1) being such that the first output signal (U1) is proportional to the position of the first output light beam (OLB1) on said first line sensor (LS1),
- a second line sensor (LS2) for generating a second output signal (U2) from a second output light beam (OLB2), said second output light beam (OLB2) being generated by said information carrier in response to said input light beam (ILB), said second line sensor (LS2) being such that the second output signal (U2) is proportional to the position of the second output light beam (OLB1) on said second line sensor (LS1),
- a calculation unit for detecting from said first output signal (U1) and said second output signal (U2), the position and data value of said data.

**7.** A system as claimed in claim 6, wherein said first line sensor (LS1) and said second line sensor (LS2) are arranged perpendicularly to each other.

## Patentansprüche

**1.** Informationsträger mit einer Schicht (L) zum Speichern von Daten, wobei die genannte Schicht einen Lichtleiter mit einer Innenfläche (IF) bildet, in der eine Matrix von Vertiefungen (ID1, ID2) vorgesehen ist, wobei die genannten Vertiefungen (ID1) derart geformt sind, dass sie einen Teil eines der genannten Schicht zugeführten Eingangslichtstrahls (ILB) in einer ersten Richtung (d1) zu einem ersten Rand (E1) des genannten Informationsträgers ablenken, wobei das Vorhandensein einer Vertiefung gespeicherte Daten in einem ersten Zustand reflektiert, und wobei das Fehlen einer Vertiefung gespeicherte Daten in einem zweiten Zustand reflektiert.

2. Informationsträger nach Anspruch 1, wobei die genannten Vertiefungen (ID1, ID2) auch derart geformt sind, dass sie einen Teil des genannten Eingangslichtstrahls in einer zweiten Richtung (d2) zu einem zweiten Rand (E2) des genannten Informationsträgers ablenken.

3. Informationsträger nach Anspruch 1, der weiterhin eine Lichtleiterstruktur (LGS) aufweist, die längs des genannten ersten Randes (E1) vorgesehen ist, und zwar zum Sammeln von Licht, das zu dem genannten ersten Rand (E1) abgelenkt worden ist, damit ein Ausgangslichtstrahl (OLB) erzeugt wird.

4. Informationsträger nach Anspruch 1, 2 oder 3, wobei die genannten Vertiefungen (ID1, ID2) prismenförmig sind.

5. Informationsträger nach Anspruch 1, 2 oder 3, wobei die genannten Vertiefungen (ID1, ID2) pyramidenförmig sind.

6. System zum Auslesen von Daten auf einem Informationsträger, wobei das genannte System Folgendes umfasst:

   - einen Generator zum Erzeugen eines Eingangslichtstrahls (ILB), der dem genannten Informationsträger zugeführt werden soll,
   - ein Stellglied zum Verlagern des genannten Eingangslichtstrahls (ILB) über Datenspuren des genannten Informationsträgers,
   - einen ersten Liniensensor (LS1) zum Erzeugen eines ersten Ausgangssignals (U1) von einem ersten Ausgangslichtstrahl (OLB1), wobei der genannte erste Ausgangslichtstrahl (OLB1) in Reaktion auf den genannten Eingangslichtstrahl I(ILB) von dem genannten Informationsträger erzeugt wird, wobei der genannte erste Liniensensor (LS1) derart ist, dass das erste Ausgangssignal (U1) zu der Lage des ersten Ausgangslichtstrahls (OLB1) auf dem ersten Liniensensor (LS1) proportional ist,
   - einen zweiten Liniensensor (LS2) zum Erzeugen eins zweiten Ausgangssignals (U2) aus einem zweiten Ausgangslichtstrahl (OLB2), wobei der genannte zweite Ausgangslichtstrahl (OLB2) in Reaktion auf den genannten Eingangslichtstrahl (ILB) von dem genannten Informationsträger erzeugt wird, wobei der genannte zweite Liniensensor (LS2) derart ist, dass das zweite Ausgangssignal (U2) zu der Lage des zweiten Ausgangslichtstrahls (OLB1) auf dem genannten zweiten Liniensensor (LS2) proportional ist,
   - eine Recheneinheit zum Detektieren der Lage und des Datenwertes der genannten Daten aus dem genannten ersten Ausgangssignal (U1) und dem genannten zweiten Ausgangssignal (U2).

7. System nach Anspruch 6, wobei der genannte erste Liniensensor (LS1) und der genannte zweite Liniensensor (LS2) senkrecht zueinander vorgesehen sind.

**Revendications**

1. Support d'informations comprenant une couche (L) pour stocker des données, ladite couche formant un guide de lumière qui présente une face interne (IF) sur laquelle est positionnée une matrice de creux (ID1, ID2), lesdits creux (ID1) étant mis en forme de manière à faire dévier une partie d'un faisceau de lumière d'entrée (ILB), qui est appliqué à ladite couche, vers un premier bord (E1) dudit support d'informations le long d'une première direction (dl), la présence d'un creux reflétant des données stockées ayant un premier état, l'absence d'un creux reflétant des données stockées ayant un deuxième état.

2. Support d'informations selon la revendication 1, dans lequel lesdits creux (ID1, ID2) sont également mis en forme de manière à faire dévier une partie dudit faisceau de lumière d'entrée vers un deuxième bord (E2) dudit support d'informations le long d'une deuxième direction (d2).

3. Support d'informations selon la revendication 1, comprenant en outre une structure de guidage de lumière (LGS) qui est positionnée le long dudit premier bord (E1) pour recueillir la lumière qui est déviée vers ledit premier bord (E1) de manière à générer un faisceau de lumière de sortie (OLB).

4. Support d'informations selon les revendications 1, 2 ou 3, dans lequel lesdits creux (ID1, ID2) sont en forme d'un prisme.

5. Support d'informations selon les revendications 1, 2 ou 3, dans lequel lesdits creux (ID1, ID2) sont en forme d'une pyramide.

6. Système de lecture de données sur un support d'informations, ledit système comprenant :

   - un générateur pour générer un faisceau de lumière d'entrée (ILB) qui est destiné à être appliqué audit support d'informations,
   - un actionneur pour déplacer ledit faisceau de lumière d'entrée (ILB) le long de pistes de données dudit support d'informations,

- un premier capteur de ligne (LS1) pour générer un premier signal de sortie (U1) à partir d'un premier faisceau de lumière de sortie (OLB1), ledit premier faisceau de lumière de sortie (OLB1) étant généré par ledit support d'informations en réponse audit faisceau de lumière d'entrée (ILB), ledit premier capteur de ligne (LS1) étant tel que le premier signal de sortie (U1) est proportionnel à la position du premier faisceau de lumière de sortie (OLB1) sur ledit premier capteur de ligne (LS1),

- un deuxième capteur de ligne (LS2) pour générer un deuxième signal de sortie (U2) à partir d'un deuxième faisceau de lumière de sortie (OLB2), ledit deuxième faisceau de lumière de sortie (OLB2) étant généré par ledit support d'informations en réponse audit faisceau de lumière d'entrée (ILB), ledit deuxième capteur de ligne (LS2) étant tel que le deuxième signal de sortie (U2) est proportionnel à la position du deuxième faisceau de lumière de sortie (OLB2) sur ledit deuxième capteur de ligne (LS2),

- une unité de calcul pour détecter à partir dudit premier signal de sortie (U1) et dudit deuxième signal de sortie (U2) la position et la valeur de données desdites données.

7. Système selon la revendication 6, dans lequel ledit premier capteur de ligne (LS1) et ledit deuxième capteur de ligne (LS2) sont disposés l'un perpendiculairement à l'autre.

FIG. 1

**FIG. 2**

**FIG. 3**

FIG. 4

FIG. 5

# FIG. 6

# FIG. 7

ID1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005027107 A1
- EP 1073097 A